(19) Europäisches Patentamt
European Patent Office
Office européen des brevets

(11) **EP 2 136 571 A2**

(12) **EUROPÄISCHE PATENTANMELDUNG**

(43) Veröffentlichungstag:
 **23.12.2009 Patentblatt 2009/52**

(51) Int Cl.:
 ***H04Q 9/00*** *(2006.01)*

(21) Anmeldenummer: **09007893.2**

(22) Anmeldetag: **16.06.2009**

(84) Benannte Vertragsstaaten:
 **AT BE BG CH CY CZ DE DK EE ES FI FR GB GR HR HU IE IS IT LI LT LU LV MC MK MT NL NO PL PT RO SE SI SK TR**

(30) Priorität: **19.06.2008 DE 102008029145**

(71) Anmelder: **METRONA WÄRMEMESSER UNION GMBH**
 **81379 München (DE)**

(72) Erfinder:
 • **Heckmann, Dieter**
  **81475 München (DE)**
 • **Schröder, Franz**
  **82054 Sauerlach (DE)**

(74) Vertreter: **Prinz & Partner**
 **Patentanwälte**
 **Rundfunkplatz 2**
 **80335 München (DE)**

(54) **Elektronisches Gerät und Verfahren zur Erfassung von Raumklimadaten**

(57) Ein elektronisches Gerät (10) zur Erfassung von Raumklimadaten umfaßt eine Temperaturmeßeinrichtung und eine Feuchtemeßeinrichtung mit einem Feuchtesensor (22) zur Messung einer Feuchte. Das Gerät (10) weist ein Rückenteil (14) zur Anbringung des Geräts (10) an einer Raumwand (12) und ein vorderes Gehäuseteil (16) auf, das im angebrachten Zustand des Geräts (10) in den Raum hineinragt. Die Temperaturmeßeinrichtung weist einen ersten Temperatursensor (18) zur Messung einer ersten Temperatur und einen zweiten Temperatursensor (20) zur Messung einer zweiten Temperatur auf. Der erste Temperatursensor (18) ist am Rückenteil (14)

und der zweite Temperatursensor (20) zusammen mit dem Feuchtesensor (22) im vorderen Gehäuseteil (16) angeordnet. Ein Verfahren zur Erfassung von Raumklimadaten umfaßt folgende Schritte:
- Messung einer ersten Temperatur an einer Raumwand (12);
- Messung einer zweiten Temperatur an einer von der Wand (12) beabstandeten Stelle im Raum;
- Messung der Feuchte an einer von der Wand (12) beabstandeten Stelle im Raum; und
- mathematische Bestimmung der Feuchte an der Wand (12) aus der ersten und der zweiten gemessenen Temperatur sowie der gemessenen Feuchte.

EP 2 136 571 A2

## Beschreibung

Die Erfindung betrifft ein elektronisches Gerät zur Erfassung von Raumklimadaten, umfassend eine Temperaturmeßeinrichtung und eine Feuchtemeßeinrichtung mit einem Feuchtesensor zur Messung einer Feuchte. Die Erfindung betrifft ferner ein Verfahren zur Erfassung von Raumklimadaten.

Eine solches Gerät ist aus der EP 1 746 556 A1 bekannt. Die kombinierte Messung von Raumtemperatur und -feuchte ermöglicht Aussagen über die Gefahr der Schimmelbildung, Notwendigkeit von Lüftung, etc. Für solche Aussagen ist die Kenntnis der Feuchte an sog. "neuralgischen Punkten" im Raum, wie etwa an kalten bzw. wetterseitigen Außenwänden oder Raumecken, von besonderem Interesse. Die Messung der Feuchte direkt an der Wand ist jedoch in kritischen Fällen nahe des Taupunkts (Kondensation) problematisch, da die Feuchtemessung in diesem Bereich ungenau wird und die Funktion der Meßelektronik bei Betauung beeinträchtigt werden könnte.

Aufgabe der Erfindung ist es, ein elektronisches Gerät der eingangs genannten Art so weiterzubilden, daß eine genaue, für das Gerät unbedenkliche Bestimmung der Feuchte ermöglicht ist.

Gelöst wird die Aufgabe gemäß der Erfindung durch ein elektronisches Gerät mit den Merkmalen des Anspruchs 1. Vorteilhafte und zweckmäßige Ausgestaltungen des erfindungsgemäßen elektronischen Geräts ergeben sich aus den Unteransprüchen.

Das erfindungsgemäße elektronische Gerät ist **dadurch gekennzeichnet, daß** das Gerät ein Rückenteil zur Anbringung des Geräts an einer Raumwand und ein vorderes Gehäuseteil aufweist, das im angebrachten Zustand des Geräts in den Raum hineinragt, und daß die Temperaturmeßeinrichtung einen ersten Temperatursensor zur Messung einer ersten Temperatur und einen zweiten Temperatursensor zur Messung einer zweiten Temperatur aufweist, wobei der erste Temperatursensor am Rückenteil und der zweite Temperatursensor zusammen mit dem Feuchtesensor im vorderen Gehäuseteil angeordnet ist.

Die Erfindung beruht auf der Erkenntnis, daß die Feuchte an der Wand aus dem mittels der beiden Temperatursensoren und dem Feuchtesensor gemessenen Wertetripel (Wandtemperatur, Raumtemperatur, Raumluftfeuchte) hinreichend genau mathematisch bestimmbar ist, so daß eine explizite Feuchtemessung direkt an der Wand mit den damit verbundenen Problemen zur Bestimmung der Wandfeuchte gar nicht notwendig ist.

Die erfindungsgemäße Sensorkonstellation ist auch deshalb besonders vorteilhaft, weil der Temperaturgradient zwischen der Wandoberfläche und der Raumluft unmittelbar bestimmt werden kann. Der Temperaturgradient ist für die Erforschung der Ursachen von Schimmelbildung von besonderer Bedeutung.

Gegenstand der Erfindung ist auch ein Verfahren zur Erfassung von Raumklimadaten mit folgenden Schritten:

- Messung einer ersten Temperatur an einer Raumwand;

- Messung einer zweiten Temperatur an einer von der Wand beabstandeten Stelle im Raum;

- Messung der Feuchte an einer von der Wand beabstandeten Stelle im Raum; und

- mathematische Bestimmung der Feuchte an der Wand aus der ersten und der zweiten gemessenen Temperatur sowie der gemessenen Feuchte.

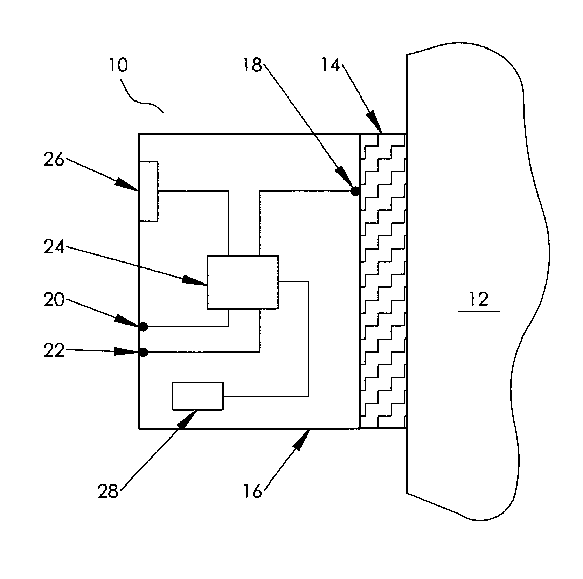

Weitere Merkmale und Vorteile der Erfindung ergeben sich aus der nachfolgenden Beschreibung unter Bezugnahme auf die beigefügte Zeichnung. In der Zeichnung zeigt die einzige Figur schematisch den Aufbau eines erfindungsgemäßen elektrischen Geräts und dessen Anordnung in einem Raum.

In der Figur ist ein erfindungsgemäßes elektrisches Gerät 10 zur Erfassung von Raumklimadaten dargestellt, das an einer Wand 12 eines Raumes angebracht ist. Grundsätzlich kann das Gerät 10 an einer beliebigen Stelle angebracht sein, sinnvoll ist jedoch - wie oben bereits erläutert - eine Oberfläche im Raum, die für das Raumklima von besonderer Bedeutung ist.

Das Gerät 10 hat ein Rückenteil 14, mit dem es an der Wand 12 angebracht ist. Das Rückenteil 14 ist vorzugsweise ein Standard-Rückenteil, wie es bei Heizkostenverteilern verwendet wird. Auf das Rückenteil 14 ist ein vorderes Gehäuseteil 16 montiert, das in den Raum hineinragt. Das vordere Gehäuseteil 16 und das Rückenteil 14 bilden somit insgesamt ein weitgehend geschlossenes Gehäuse.

Am Rückenteil 14 ist ein erster Temperatursensor 18 einer Temperaturmeßeinrichtung angeordnet, der zur Messung der Temperatur der Wand 12 bzw. der konkreten Oberfläche, an der das Gerät 10 angebracht ist, vorgesehen ist. Ein zweiter Temperatursensor 20 der Temperaturmeßeinrichtung ist im vorderen Gehäuseteil 16 angeordnet, vorzugsweise an der vom Rückenteil 14 abgewandten und dem Raum zugewandten Seite des Gehäuseteils 16.

Des weiteren umfaßt das Gerät 10 eine Feuchtemeßeinrichtung mit einem Feuchtesensor 22, der in unmittelbarer Nähe des zweiten Temperatursensors 20 angeordnet ist. Ziel ist es nämlich, mit dem zweiten Temperatursensor 20 und dem Feuchtesensor 22 die Temperatur und die Feuchte möglichst an der gleichen Stelle zu messen. Diese Stelle soll repräsentativ für die Raumluft sein, weshalb diese beiden Sensoren 20, 22 (innerhalb des Geräts) möglichst weit von der Wand 12 und vom ersten Temperatursensor 18 beabstandet sein sollten (in der Praxis sind dies je nach Gehäusedimension einige Zentimeter).

Damit die Feuchte der Raumluft mit ausreichender Genauigkeit gemessen werden kann, ist das vordere Gehäuseteil 16 so ausgebildet, daß z. B. über eine oder mehrere Öffnungen eine direkte Strömungsverbindung zwischen der Raumluft und dem Feuchtesensor 22 besteht.

Um nun die Feuchte an der Wand 12 zu bestimmen, werden die von den drei Sensoren 18, 20, 22 gemessenen Werte einer Elektronik 24 zugeführt. Aus der vom ersten Temperatursensor 18 gemessenen Wandtemperatur und der vom zweiten Temperatursensor 20 gemessenen Raumtemperatur sowie der vom Feuchtesensor 22 gemessenen Raumfeuchte wird die Wandfeuchte (relative Feuchte an der Wand 12) gemäß physikalischer Grundlagen mathematisch berechnet wie nachfolgend erläutert.

Für die mathematische Berechnung der relativen Feuchte an der Wand RH(Tw) werden empirisch ermittelte Exponentialfunktionen Ps für den Wasserdampfsättigungsdampfdruck über Wasser bzw. Eis (Psw, Psi) in den interessierenden Temperaturbereichen verwendet. Für die relative Feuchte gilt per definitionem

$$RH(T) = P/Ps *100$$

wobei

RH: relative Feuchte,
T: Temperatur,
P: Wasserdampfdampfdruck,
Ps: Wasserdampfsättigungsdampfdruck.

Meßgrößen im erfindungsgemäßen Verfahren sind die vom ersten Temperatursensor 18 gemessene Wandtemperatur TW, die vom zweiten Temperatursensor 20 gemessene Raumtemperatur TL und die vom Feuchtesensor 22 gemessene relative Feuchte der Raumluft RH(TL).

Gemäß dem Ansatz, daß die absolute Feuchte (Wasserdampfdampfdruck P) an der Wand 12 und in kurzem Abstand davor im Raum konstant ist (molekulare Diffusion), d. h.

$$P(TL) = P(TW) \equiv P$$

gilt in direktem funktionalem Zusammenhang

$$RH(TL)*Ps(TL) = P*100 = Ps(TW)* RH(TW)$$

und die relative Wandfeuchte RH(TW) ergibt sich zu

$$RH(TW) = Ps(TL) / Ps(TW) * RH(TL)$$

Das Verhältnis der Sättigungsdampfdrucke ergibt sich durch Anwendung der oben referenzierten empirischen Formeln für den Wasserdampfdruck über Wasser bzw. Eis.

Die vom Gerät 10 erfaßten Meßwerte und die im Gerät 10 mathematisch berechneten Werte können auf einer Anzeigeeinrichtung 26 ausgegeben werden. Zum Ablesen dieser Daten (wie bei einem Heizkostenverteiler) können die Daten entweder von Hand notiert, per Infrarotschnittstelle (nicht gezeigt) über kurze Entfernung auf einen mobilen Empfänger übertragen oder per Funk über eine größere Entfernung an einen zentralen Empfänger übermittelt werden. Für die Funkübertragung weist das Gerät 10 eine auf den zentralen Empfänger abgestimmte Sendeeinrichtung 28 auf. Die Intervalle zwischen den einzelnen Datenübermittlungen an den zentralen Empfänger können variieren, um je nach angebotener Dienstleistung z. B. zunächst tagesgenaue und später wöchentliche oder monatliche Raumklimadaten zur Verfügung zu haben.

Optional umfaßt das Gerät 10 eine Warneinrichtung, die einen Hinweis ausgibt, wenn die gemessene erste Temperatur (Wandtemperatur) eine im Gerät 10 berechnete kritische Temperatur über- oder unterschreitet. Die kritische Temperatur kann insbesondere mit dem Taupunkt an der Wand 12 in Beziehung stehen, d. h. bei Annäherung der Wandtemperatur an den Taupunkt wird dem Verbraucher vom Gerät 10 ein Warnhinweis gegeben. Um eine weitergehende Analyse zu ermöglichen, kann die Warneinrichtung die Zeitintervalle der Temperaturüberschreitung bzw. -unterschreitung aufintegrieren.

Dieselbe und/oder eine andere Warneinrichtung im Gerät 10 kann dafür vorgesehen sein, einen Hinweis auszugeben, wenn die gemessene Feuchte (Raumfeuchte) oder die mathematisch bestimmte Feuchte (Wandfeuchte) eine vorgegebene kritische Feuchte über- oder unterschreitet. Die Zeitintervalle der Feuchteüber- bzw. -unterschreitung können wiederum aufintegriert werden.

**Patentansprüche**

1. Elektronisches Gerät (10) zur Erfassung von Raumklimadaten, umfassend eine Temperaturmeßeinrichtung und eine Feuchtemeßeinrichtung mit einem Feuchtesensor (22) zur Messung einer Feuchte, **dadurch gekennzeichnet, daß** das Gerät (10) ein Rückenteil (14) zur Anbringung des Geräts (10) an einer Raumwand (12) und ein vorderes Gehäuseteil (16) aufweist, das im angebrachten Zustand des Geräts (10) in den Raum hineinragt, und daß die Temperaturmeßeinrichtung einen ersten Temperatursensor (18) zur Messung einer ersten Temperatur und einen zweiten Temperatursensor (20) zur Messung einer zweiten Temperatur aufweist, wobei der erste Temperatursensor (18) am Rückenteil (14) und der zweite Temperatursensor (20) zusammen mit dem Feuchtesensor (22) im vorderen Gehäuseteil (16) angeordnet ist.

2. Elektronisches Gerät (10) nach Anspruch 1, **gekennzeichnet durch** eine Elektronik (24) zur mathematischen Bestimmung der Feuchte an der Wand (12) aus der gemessenen ersten Temperatur und der gemessenen zweiten Temperatur sowie der gemessenen Feuchte.

3. Elektronisches Gerät (10) nach Anspruch 1 oder 2, **dadurch gekennzeichnet, daß** der zweite Temperatursensor (20) und der Feuchtesensor (20) unmittelbar benachbart zueinander angeordnet sind.

4. Elektronisches Gerät (10) nach einem der vorhergehenden Ansprüche, **dadurch gekennzeichnet, daß** der zweite Temperatursensor (20) und der Feuchtesensor (22) in einem Abstand von einigen Zentimetern vom ersten Temperatursensor (18) entfernt angeordnet sind.

5. Elektronisches Gerät (10) nach einem der vorhergehenden Ansprüche, **dadurch gekennzeichnet, daß** das vordere Gehäuseteil (16) so ausgebildet ist, daß eine direkte Strömungsverbindung zwischen der Raumluft und dem Feuchtesensor (22) besteht.

6. Elektronisches Gerät (10) nach einem der vorhergehenden Ansprüche, **gekennzeichnet durch** eine Warneinrichtung, die einen Hinweis ausgibt, wenn die gemessene erste Temperatur eine im Gerät (10) berechnete kritische Temperatur über- oder unterschreitet.

7. Elektronisches Gerät (10) nach einem der vorhergehenden Ansprüche, **gekennzeichnet durch** eine Warneinrichtung, die einen Hinweis ausgibt, wenn die gemessene oder die mathematisch bestimmte Feuchte eine vorgegebene kritische Feuchte über- oder unterschreitet.

8. Elektronisches Gerät (10) nach Anspruch 6 oder 7, **dadurch gekennzeichnet, daß** die Warneinrichtung die Zeitintervalle der Temperaturüber- bzw. -unterschreitung bzw. die Zeitintervalle der Feuchteüber- bzw.

   - unterschreitung aufintegriert.

9. Elektronisches Gerät (10) nach einem der vorhergehenden Ansprüche, **gekennzeichnet durch** eine Sendeeinrichtung (28) zur Übermittlung gemessener und/oder mathematisch bestimmter Werte an einen zentralen Empfänger.

10. Funksystem zur Erfassung von Raumklimadaten, mit einem elektronischen Gerät (10) nach Anspruch 9 und einem zentralen Empfänger, wobei die Intervalle zwischen der Übermittlung gemessener und/oder mathematisch bestimmter Werte an den zentralen Empfänger variieren.

11. Verfahren zur Erfassung von Raumklimadaten, mit folgenden Schritten:

   - Messung einer ersten Temperatur an einer Raumwand (12);
   - Messung einer zweiten Temperatur an einer von der Wand (12) beabstandeten Stelle im Raum;
   - Messung der Feuchte an einer von der Wand (12) beabstandeten Stelle im Raum; und
   - mathematische Bestimmung der Feuchte an der Wand (12) aus der ersten und der zweiten gemessenen Temperatur sowie der gemessenen Feuchte.

12. Verfahren nach Anspruch 11, **dadurch gekennzeichnet, daß** die Messung der zweiten Temperatur und die Messung der Feuchte an unmittelbar zueinander benachbarten Stellen erfolgen.

13. Verfahren nach Anspruch 11 oder 12, **dadurch gekennzeichnet, daß** die gemessenen und/oder mathematisch bestimmten Werte in variierenden Zeitintervallen an einen zentralen Empfänger übermittelt werden.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1746556 A1